# EUROPÄISCHE PATENTSCHRIFT

(11) **EP 0 428 855 B1**
(45) Veröffentlichungstag und Bekanntmachung des Hinweises auf die Patenterteilung: **03.02.1993**
(21) Anmeldenummer: 90119377.1
(22) Anmeldetag: 10.10.1990
(51) Int. Cl.: A01B 59/043

(54) **Längenveränderlicher Oberlenker für einen Dreipunktkuppler**
Longitudinally adjustable upper guide for a three point coupling device
Bras de liaison supérieur ajustable longitudinalement pour un attelage à trois points

(30) Priorität: 18.11.1989 DE 3938419
(43) Veröffentlichungstag der Anmeldung: 29.05.1991
(73) Patentinhaber: GKN Walterscheid GmbH, D-53784 Lohmar (DE)
(72) Erfinder: Herchenbach, Paul, W-5207 Ruppichteroth (DE)
(74) Vertreter: Harwardt, Günther, Dipl.-Ing.

(56) Entgegenhaltungen:
- DE-A- 1 457 675
- US-A- 3 853 335
- US-A- 4 778 194

## Beschreibung

Die Erfindung betrifft einen längenveränderlichen Oberlenker für einen Dreipunktkuppler zum Kuppeln von landwirtschaftlichen Geräten an einen Traktor, mit einer Hülse, die an ihren Enden innen mit Gewindebohrungen mit gegenläufigem Gewinde versehen ist, in welche ein einen Gewindeschaft mit entsprechendem Gewinde aufweisendes Anschlußauge oder Kupplungshaken verstellbar eingeschraubt ist, wobei die Hülse mit einem schwenkbaren Betätigungshebel versehen ist, über den eine Sperrklinke durch einen Durchbruch in der Hülse aus einer Nut des Gewindeschaftes des Anschlußauges oder des Kupplungshakens aus einer Sperrstellung herausbewegbar ist. Solch ein Oberlenker ist durch die US-A-4778194 bekannt.

Bei einer derartigen Ausführungsform ist die Sperrklinke starr mit dem Betätigungshebel verbunden. Durch diese Anordnung besteht die Gefahr, daß dann, wenn eine Verstellung des Lenkers durch Verdrehen der Hülse stattfindet oder auch bei dem Überführen und Suchen der Nut für die Festlegung in der Sperrstellung durch die aufgebrachte Handkraft eine Deformation des Gewindes, welches von der Sperrklinke beaufschlagt wird, stattfinden kann. Die übereinstimmende Lage der Nut zur Sperrklinke muß nämlich durch Probieren gesucht werden, so daß auch schon unbeabsichtigt Kraft auf den benachbarten Gewindeabschnitt ausgeübt werden kann.

Durch eine solche Deformation kann die Funktionsfähigkeit der Verstellung beeinträchtigt werden.

Der Erfindung liegt die Aufgabe zugrunde, einen Oberlenker vorzuschlagen, bei dem eine sichere Sperrung eines Gewindeschaftes eines der beiden Anschlußelemente, nämlich von Anschlußauge oder Kupplungshaken selbsttätig eintritt, ohne daß Beschädigungen an dem Gewinde oder der Nut des Gewindeschaftes eintreten können.

Diese Aufgabe wird erfindungsgemäß dadurch gelöst, daß der Betätigungshebel und die Sperrklinke um einen Freigang unabhängig voneinander schwenkbar an der Hülse gelagert sind, daß die Sperrklinke in Richtung Sperrstellung von einer Feder beaufschlagt ist und daß der Betätigungshebel mit einem Anschlag versehen ist, der an der Sperrklinke in Sperrstellung anliegt, so daß der Betätigunsgshebel der Sperrklinke durch Verschwenken um einen Schwenkwinkel in die Ausrückstellung überführen kann.

Von Vorteil bei dieser Ausführungsform ist, daß das Einrasten der Sperrklinke unabhängig von der Betätigung des Betätigungshebels selbsttätig erfolgt, wenn der Betätigungshebel in die Ausgangsposition zurückbewegt wird. Das Einrasten der Sperrklinke erfolgt automatisch unter Federkraft, wenn eine übereinstimmende Lage zwischen der Nut des Gewindeschaftes und der Sperrklinke, die der Hülse zugeordnet ist, erreicht ist. Da die Sperrklinke dann, wenn sie in die Nut eingefallen ist, auch wieder in Anlage zu dem Anschlag des Betätigungshebels gelangt, erfolgt unmittelbar durch Verschwenken des Betätigungshebels auch ein Ausrücken der Sperrklinke. Sperrklinke und Betätigungshebel werden gemeinsam bewegt. Lediglich die Bewegung in die Sperrstellung hinein erfolgt durch die Sperrklinke unabhängig von der Bewegung des Betätigungshebels, wenn dieser in seine Ausgangsstellung zurückgeführt worden ist. Der Betätigungshebel ist also in die Ausgangsposition zurückbewegbar, ohne daß ein Verschwenken der Sperrklinke erfolgt.

In weiterer Ausgestaltung ist vorgesehen, daß der Winkelweg des Freigangs dem Schwenkwinkel entspricht, den die Sperrklinke von der Ausrückstellung in die Sperrstellung zurücklegt. Hierdurch wird ein Totgang vermieden.

Bevorzugt ist vorgesehen, daß der Betätigungshebel und die Sperrklinke gemeinsam in einem U-förmigen Lagerbock gelagert sind, der an der Hülse befestigt ist.

Eine besonders günstige Lagerung ergibt sich dann, wenn wie vorgeschlagen, der Betätigungshebel an seinem zu lagernden Ende gabelartig ausgebildet ist und die Sperrklinke zwischen den Gabelarmen aufgenommen ist und diese zusammen über einen Bolzen im Lagerbock gelagert sind.

Bevorzugt ist die Feder als Schenkelfeder ausgebildet, deren einer Federschenkel an der Hülse und deren anderer Federschenkel an der Sperrklinke abgestützt ist.

Eine besonders günstige Beaufschlagung ergibt sich dann, wenn zwei Federn vorhanden sind, deren an der Sperrklinke abgestützte Federschenkel miteinander verbunden sind. Hierdurch werden die Kräfte symmetrisch eingeleitet, so daß ein Verklemmen der Sperrklinke ausgeschlossen ist.

Bevorzugt ist der Anschlag an der Innenfläche des Gabelschaftes zwischen den beiden Gabelarmen angeordnet. Ferner ist vorgeschlagen, die Schwenkachse des Betätigunshebels und der Sperrklinke so anzuordnen, daß sie quer zur Längsachse verläuft.

Ein bevorzugtes Ausführungsbeispiel der Erfindung ist in der Zeichnung schematisch dargestellt.

Es zeigt
Figur 1 einen Teil eines Traktorhecks mit einer Dreipunktanbauvorrichtung,
Figur 2 den Oberlenker in der Seitenansicht, teilweise geschnitten, wobei sich die Sperrklinke in der Sperrstellung befindet,

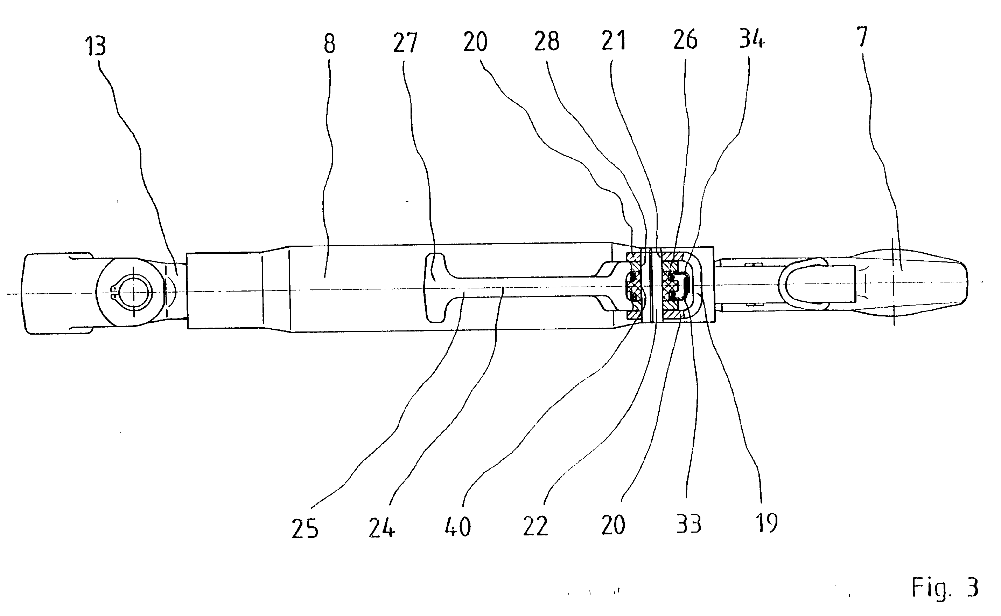

Figur 3 eine Draufsicht zu Figur 2 und
Figur 4 ein Detail hinsichtlich der Anordnung der Sperrklinke und des Betätigungshebels, wobei sich die Sperrklinke noch in der Ausrückstellung befindet.

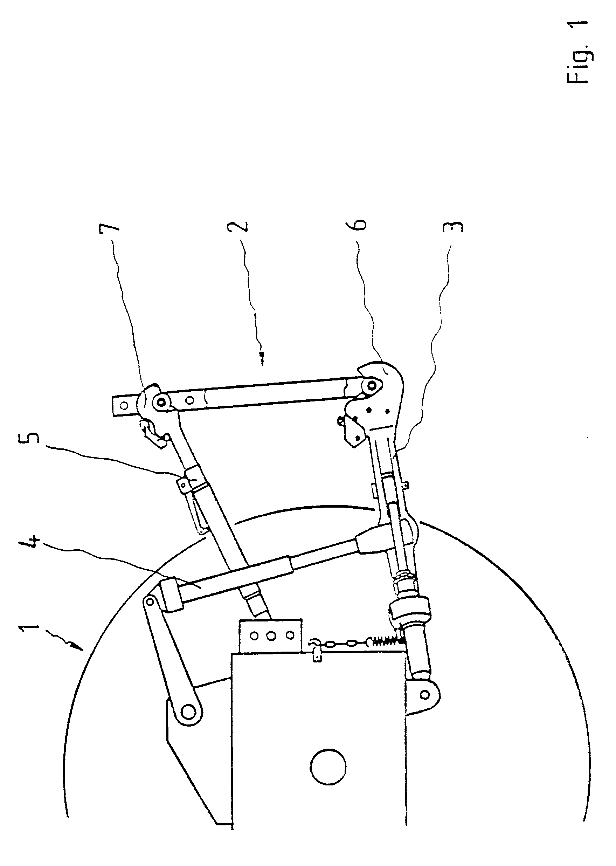

Der in Figur 1 dargestellte Traktor 1 ist an seinem Schlepperheck mit einer Dreipunktanbauvorrichtung 2 versehen. Die Dreipunktanbauvorrichtung 2 dient zur Anhängung von landwirtschaftlichen Geräten. Es sind zwei Unterlenker 3 vorgesehen, die zur Längsachse des Schleppers parallel versetzt angeordnet sind. Die beiden Unterlenker 3 sind über Hubstreben 4 mit einem, Kraftantrieb verbunden, über den sie heb- und senkbar sind. Oberhalb der beiden Unterlenker 3 und etwa im Bereich der Längsachse des Traktors 1 ist ein Oberlenker 5 angeordnet. Die beiden Unterlenker 3 und der Oberlenker 5 sind mit Kupplungshaken 6,7 versehen. Die Kupplungshaken 6, 7 dienen zur Befestigung des anzuhängenden Gerätes.

Zur Ausrichtung des Gerätes auf die erforderliche Lage ist der Oberlenker 5 längenverstellbar ausgebildet. Der Oberlenker 5 besteht aus einer zentralen Hülse 8, die zu den Enden hin eingezogen ist. Die Enden sind mit 9 und 10 bezeichnet. In den eingezogenen Enden der Hülse 8 sind Gewindebohrungen 11,12 vorhanden. Die Steigung der Gewinde der beiden Gewindebohrungen 11,12 ist gegenläufig. Von den Enden 9, 10 der Hülse 8 her sind, ein mit einem Gewindeschaft 15 versehenes Anschlußauge 13 beziehungsweise ein mit einem Gewindeschaft 14 versehener Kupplungshaken 7 eingeschraubt. Durch Verdrehen der Hülse 8 erfolgt eine Längenänderung der Anschlußlänge entlang der Längsachse 17. Bei dem vorliegenden Ausführungsbeispiel ist der Gewindeschaft 14, dem der Kupplungshaken 7 zugeordnet ist, mit einer Nut 18 versehen. Die Nut 18 verläuft parallel zur Längsachse 17.

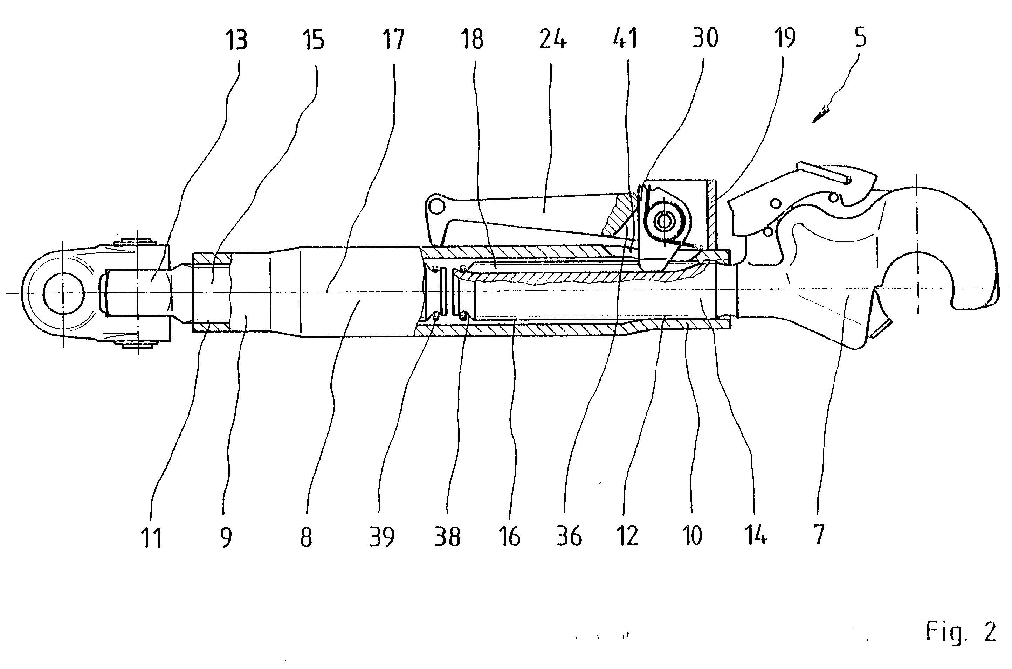

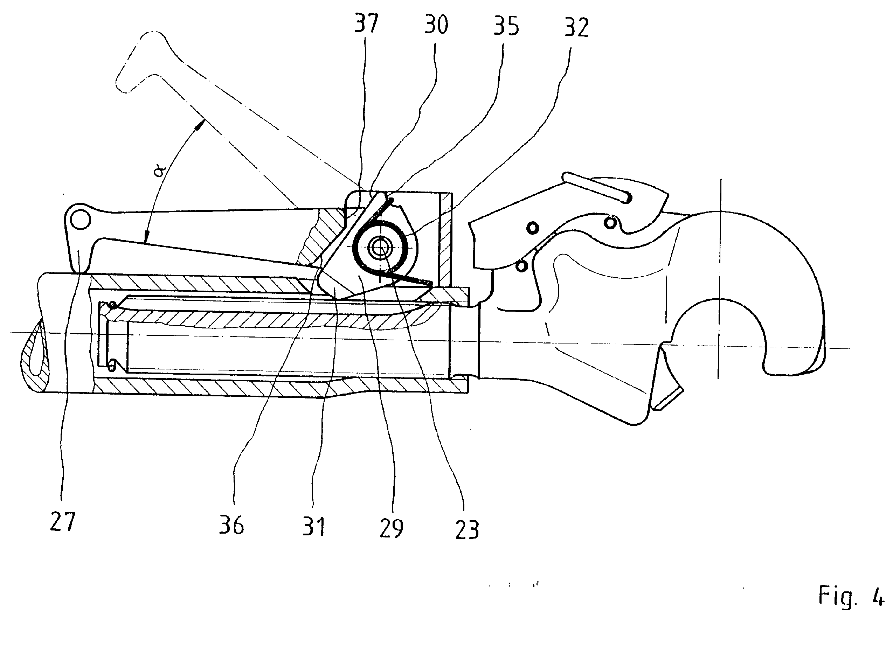

Zur Erleichterung des Verdrehens der Hülse 8 ist ein Betätigungshebel 24 vorhanden. Der Betätigungshebel 24 ist in einem Lagerbock 19 gelagert. Der Lagerbock ist U-förmig gestaltet. Seine beiden Schenkel sind mit 20 bezeichnet. In den beiden Schenkeln 20 ist jeweils eine Bohrung 21 vorgesehen. Der Betätigungshebel 24 umfaßt einen Gabelschaft 25 und ein an diesen anschließendes gabelartiges Ende mit Gabelarmen 26. In den Gabelarmen 26 sind Bohrungen 28 vorgesehen. Das andere Ende des Gabelschaftes 25 besitzt eine Stütze 27. Zwischen den beiden Gabelarmen 26 ist eine Sperrklinke 29 aufgenommen. Die Sperrklinke 29 sowie die Gabelarme 26 besitzen Bohrungen 28 beziehungsweise 40, welche korrespondierend zu den Bohrungen 21 des Lagerbockes 14 ausgebildet sind. In diese Bohrungen ist ein Lagerbolzen 22 eingesetzt, dessen Achse 23 die Schwenkachse für den Betätigungshebel 24 und die Sperrklinke 29 bildet. Aus den Figuren 2 und 4 ist erkennbar, daß die Sperrklinke 29 unabhängig von dem Betätigungshebel 24 schwenkbar ist. Die Sperrklinke 29 wird von Schenkelfedern 32 beaufschlagt, deren erster Federschenkel 33 an der Hülse 8 oder dem Lagerbock 19 abgestützt ist und deren zweiter Schenkel 34 in eine Hohlkehle 35 der Sperrklinke 29 eingreift. Durch die Schenkelfeder 32 wird ein Moment auf die Sperrklinke 29 in Richtung auf die Sperrstellung, wie sie in Figur 2 dargestellt ist, ausgeübt. Der Betätigungshebel 24 ist jedoch im Bereich der Gabel zwischen den Gabelarmen 26 an seiner Innenfläche 36 mit einem Anschlag 37 versehen, der in Anlage zur Anlagefläche 30 der Sperrklinke 29 bringbar ist und bei Verschwenken ausgehend von der in Figur 2 dargestellten Lage in die in Figur 4 strichpunktiert dargestellte Lage die Sperrklinke 23 in die Ausrückstellung mitnimmt. Es ist erkennbar, daß in der Hülse 8 ein Durchbruch 41 vorgesehen ist, durch den die Sperrklinke 29 mit ihrem Riegelabschnitt 31 in die Nut 18 des Gewindeschaftes 14 hineinragt und damit die HÜlse 8 gegen Verdrehen gegenüber dem Kupplungshaken 7 sichert. An der Innenfläche 36 ist ein Freigang gegenüber der Anlagefläche 30 der Sperrklinke 29 vorgesehen, wenn, wie dargestellt, die Sperrklinke 29 mit ihrer Anlagefläche 30 an dem Anschlag 27 der Innenfläche 36 anliegt. Die Größe des Freiganges entspricht einem Schwenkwinkel α , der erforderlich ist, um die Sperrklinke 29 aus der Sperrstellung gemäß Figur 2 in eine Ausrückstellung gemäß Figur 4 oder umgekehrt zu überführen. Nachdem eine Verstellung der Hülse 8 durch Drehen stattgefunden hat und wieder eine Verriegelung erfolgen soll, wird der Betätigungshebel 24 mit seiner Stütze 27 in Anlage zur Außenfläche der Hülse 8 bewegt. Bei dieser Bewegung verbleibt dann, wenn nicht zufällig eine übereinstimmende Position des Riegelabschnittes 31 zu der Nut 18 des Gewindeschaftes 14, sich eingestellt hat, die Sperrklinke 29 in ihrer ausgerückten Stellung in Anlage zum Gewinde 16 des Gewindeschaftes 14, bis eine Übereinstimmung zur Nut 18 erzielt wird. Dann kann die Sperrklinke 29 aufgrund der Beaufschlagung durch die Schenkelfeder 32 mit ihrem Riegelabschnitt 31 in die Nut 18 einrasten. Von dem Betätigungshebel 24 können im Sinne des Einrückens in die Sperrstellung keine Kräfte auf die Sperrklinke 29 ausgeübt werden. Der Ausrückhebel 24 gibt lediglich die Sperrklinke 29 so weit frei, daß diese unter der Kraft der Schenkelfeder 32 selbsttätig in die Sperrstellung einrücken kann. Die Gewindeschäfte 14,15 sind gegen unbeabsichtigtes Herausdrehen aus der Hülse 8 durch in Nuten 38 eingelegte Sicherungsringe 39 gesichert.

### Bezugszeichenliste

- 1: Traktor
- 2: Dreipunktanbauvorrichtung
- 3: Unterlenker
- 4: Hubstrebe
- 5: Oberlenker
- 6,7: Kupplungshaken
- 8: Hülse
- 9,10: Enden der Hülse
- 11,12: Gewindebohrung
- 13: Anschlußauge
- 14: Gewindeschaft des Kupplungshakens des Oberlenkers
- 15: Gewindeschaft des Anschlußauges
- 16: Gewinde des Kupplungshakens des Oberlenkers
- 17: Längsachse der Hülse
- 18: Nut im Gewindeschaft
- 19: Lagerbock
- 20: U-Schenkel des Lagerbocks
- 21: Bohrung im Lagerbock
- 22: Lagerbolzen
- 23: Schwenkachse
- 24: Betätigungshebel
- 25: Gabelschaft
- 26: Gabelarme
- 27: Stütze
- 28: Bohrung in Gabelarm
- 29: Sperrklinke
- 30: Anlagefläche
- 31: Riegelabschnitt
- 32: Schenkelfeder
- 33: erster Federschenkel
- 34: zweiter Federschenkel
- 35: Kehle in Sperrklinke
- 36: Innenfläche
- 37: Anschlagfläche des Betätigungshebels
- 38: Nut in Gewindeschaft
- 39: Sicherungsring
- 40: Bohrung in Sperrklinke
- 41: Durchbruch in Hülse
- α: Schwenkwinkel/Freigangswinkel

## Patentansprüche

1. Längenveränderlicher Oberlenker (5) für einen Dreipunktkuppler zum Kuppeln von landwirtschaftlichen Geräten an einen Traktor, mit einer Hülse (8), die an ihren Enden innen mit Gewindebohrungen mit gegenläufigem Gewinde versehen ist, in welche ein einen Gewindeschaft entsprechendem Gewinde aufweisendes Anschlußauge oder Kupplungshaken verstellbar eingeschraubt ist, wobei die Hülse (8) mit einem schwenkbaren Betätigungshebel (24) versehen ist, über den eine Sperrklinke (29) durch einen Durchbruch (41) in der Hülse (8) aus einer Nut (18) des Gewindeschaftes des Anschlußauges oder des Kupplungshakens aus einer Sperrstellung herausbewegbar ist,
dadurch gekennzeichnet,
daß der Betätigungshebel (24) und die Sperrklinke (29) um einen Freigang (α) unabhängig voneinander schwenkbar an der Hülse (8) gelagert sind, daß die Sperrklinke (29) in Richtung Sperrstellung von einer Feder (32) beaufschlagt ist und daß der Betätigungshebel (24) mit einen Anschlag (37) versehen ist, der an der Sperrklinke (29) in Sperrstellung anliegt, so daß der Betätigungshebel die Sperrklinke durch Verschwenken um einen Schwenkwinkel (α) in die Ausrückstellung überführen kann.

2. Oberlenker nach Anspruch 1,
dadurch gekennzeichnet,
daß der Winkelweg des Freigangs (α) dem Schwenkwinkel (α) entspricht, den die Sperrklinke (29) von der Ausrückstellung in die Sperrstellung zurücklegt.

3. Oberlenker nach Anspruch 1,
dadurch gekennzeichnet,
daß der Betätigungshebel (24) und die Sperrklinke (29) gemeinsam in einem U-förmigen Lagerbock (19) gelagert sind, der an der Hülse (8) befestigt ist.

4. Oberlenker nach den Ansprüchen 1 oder 3,
dadurch gekennzeichnet,
daß der Betätigungshebel (24) an seinem zu lagernden Ende gabelartig ausgebildet ist und die Sperrklinke (29) zwischen den Gabelarmen (26) aufgenommen ist und diese zusammen über einen Bolzen (22) im Lagerbock (19) gelagert sind.

5. Oberlenker nach Anspruch 1,
dadurch gekennzeichnet,
daß die Feder (32) als Schenkelfeder ausgebildet ist, deren einer Federschenkel (33) an der Hülse (8) und deren anderer Federschenkel (34) an der Sperrklinke (29) abgestützt ist.

6. Oberlenker nach Anspruch 5,
dadurch gekennzeichnet,
daß zwei Federn (32) vorhanden sind, deren an der Sperrklinke (29) abgestützte Federschenkel (34) miteinander verbunden sind.

7. Oberlenker nach Anspruch 4,
dadurch gekennzeichnet,
daß der Anschlag (37) an der Innenfläche (36) des Gabelschaftes (25) zwischen den beiden Gabelarmen (26) angeordnet ist.

8. Oberlenker nach Anspruch 1,
dadurch gekennzeichnet,
daß die Schwenkachse (23) des Betätigungshebels (24) und der Sperrklinke (29) quer zur Längsachse (17) verläuft.

## Claims

1. A length-adjustable upper steering arm (5) for a three-point coupling device for connecting an agricultural implement to a tractor, having a sleeve (8) which, at its ends, is provided with threaded bores with internal threads extending in opposite directions, into which a connecting eye or coupling hook comprising a threaded shank with a corresponding thread is threaded so as to be adjustable, the sleeve (8) being provided with a pivotable operating lever (24) permitting a locking ratchet (29) to be moved out of its locking position in a groove (18) of the treaded shank of the connecting eye or coupling hook through an aperture (41) in the sleeve (8),
characterised in
that the operating lever (24) and the locking ratchet (29) are supported at the sleeve (8) so as to be pivotable independently of one another by a freewheeling movement(α), that the locking ratchet (29) is loaded by a spring (32) in the direction of the locking position and that the operating lever (24) is provided with a stop (37) which, in the locking position, rests against the locking ratchet (29) thereby enabling the operating lever to transfer the locking ratchet into the disengaged position by pivoting it around a pivot angle (α).

2. An upper steering arm according to claim 1,
characterised in
that the angular path of the freewheeling movement (α) corresponds to the pivot angle (α) covered by the locking ratchet (29) from the disengaged position into the locking position.

3. An upper steering arm according to claim 1,
characterised in
that the operating lever (24) and the locking ratchet (29) are jointly supported in a U-shaped bearing block (19) which is attached to the sleeve (8).

4. An upper steering arm according to claims 1 or 3,
characterised in
that at its end to be supported, the operating lever (24) is designed to be yoke-like, that the locking ratchet (29) is accommodated between the yoke arms (26), the latter being jointly supported in a bearing block (19) via a pin (22).

5. An upper steering arm according to claim 1,
characterised in
that the spring (32) is designed as a leg spring, one spring leg (33) being supported on the sleeve (8) and the other spring leg (34) being supported on the locking ratchet (29).

6. An upper steering arm according to claim 5,
characterised in
that there are provided two springs (32) whose spring legs (34) supported on the locking ratchet (29) are connected to one another.

7. An upper steering arm according to claim 4,
characterised in
that the stop (37) is arranged at the inner face (36) of the yoke shank (25) between the two yoke arms (26).

8. An upper steering arm according to claim 1,
characterised in
that the pivot axes (23) of the operating lever (24) and of the locking ratchet (29) extend transversely relative to the longitudinal axis (17).

## Revendications

1. Barre de poussées supérieure (5) de longueur variable pour un attelage à trois points servant à atteler des instruments agricoles à un tracteur, comprenant un manchon (8) qui est muni intérieurement, à ses extrémités, de filetages de pas inverses l'un de l'autre, dans lesquels un oeillet de raccordement ou un crochet d'attelage présentant une tige filetée munie d'un filetage correspondant est vissé de façon réglable, le manchon (8) étant muni d'un levier d'actionnement pivotant (24) au moyen duquel un cliquet de blocage (29) peut être écarté d'une position de blocage en se dégageant d'une rainure (18) de la tige filetée de l'oeillet de raccordement ou du crochet d'attelage en passant à travers une ouverture (41) du manchon (8),
caractérisée
en ce que le levier d'actionnement (24) et le cliquet de blocage (29) tourillonnent sur le manchon (8) de façon à pouvoir pivoter indépendamment l'un de l'autre sur un mouvement à vide (α), en ce que le cliquet de blocage (29) est rappelé vers sa position de blocage par un ressort (32), et en ce que le levier d'actionnement (24) est muni d'une butée (37) qui s'appuie contre le cliquet de blocage (29) dans la position de blocage, de sorte que le levier d'actionnement peut amener le cliquet de blocage à la position de dégagement en pivotant d'un angle de pivotement (α).

2. Barre de poussée supérieure selon la revendication 1,
caractérisée
en ce que la course angulaire du mouvement à vide (α) correspond à l'angle d'oscillation (α) que le cliquet de blocage (29) parcourt de la position de dégagement à la position de blocage.

3. Barre de poussée supérieure selon la revendication 1,
caractérisée
en ce que le levier d'actionnement (24) et le cliquet de blocage (29) tourillonnent en commun dans un support palier (19) en forme de U qui est fixé au manchon (8).

4. Barre de poussée supérieure selon les revendications 1 ou 3,
caractérisée
en ce que le levier d'actionnement (24) est en forme de fourche à son extrémité de tourillonnement, et le cliquet de blocage (29) est logé entre les bras (26) de la fourche et le cliquet et ces bras sont tourillonnés dans le support palier (19) au moyen d'une broche (22).

5. Barre de poussée supérieure selon la revendication 1,
caractérisée
en ce que le ressort (32) est constitué par un ressort à branches dont une branche (33) prend appui sur le manchon (8) et dont l'autre branche (34) prend appui sur le cliquet de blocage (29).

6. Barre de poussée supérieure selon la revendication 5,
caractérisée
en ce qu'il comprend deux ressort (32) dont les branches (34) qui prennent appui sur le cliquet de blocage (29) sont reliées l'une à l'autre.

7. Barre de poussée supérieure selon la revendication 4,
caractérisée
en ce que la butée (37) est agencée contre la surface intérieure (36) de la tige (25) de la fourche, entre les deux bras (26) de la fourche.

8. Barre de poussée supérieure selon la revendication 1,
caractérisée
en ce que l'axe (23) de pivotement du levier d'actionnement (24) et du cliquet de blocage (29) s'étend perpendiculairement à l'axe longitudinal (17).
